# EUROPEAN PATENT SPECIFICATION

(11) **EP 4 576 384 B1**
(45) Date of publication and mention of the grant of the patent: **09.12.2026**
(21) Application number: 24840095.4
(22) Date of filing: 10.07.2024
(51) Int. Cl.: H01M 50/383, H01M 50/249, H01M 50/271, H01M 50/289

(54) **BATTERY PACK**
BATTERIEPACK
BLOC-BATTERIE

(30) Priority: 12.07.2023 KR 20230090616
(43) Date of publication of application: 25.06.2025
(73) Proprietor: LG Energy Solution, Ltd., Seoul 07335 (KR)
(72) Inventor: PARK, Ju-Hun, Daejeon 34122 (KR); CHANG, Hyuk-Kyun, Daejeon 34122 (KR)
(74) Representative: Plasseraud IP
(86) International application number: PCT/KR2024/009880
(87) International publication number: WO 2025/014285

(56) References cited:
- CN-U- 208 111 552
- KR-A- 20140 130 575
- KR-A- 20210 077 278
- KR-A- 20230 009 760
- KR-A- 20230 009 760
- KR-A- 20230 061 158
- US-A1- 2022 302 548
- US-A1- 20230 043 355
- US-A1- 20230 163 406

## Description

### TECHNICAL FIELD

The present disclosure relates to a battery pack.

### BACKGROUND ART

As the demand for portable electronic products such as laptops, video cameras, mobile phones, and the like rapidly increases, and as robots, electric vehicles, and the like are progressively commercialized, active researches on high-performance secondary batteries capable of being repeatedly charged and discharged are underway.

Currently commercialized secondary batteries include nickel-cadmium batteries, nickel-hydrogen batteries, nickel-zinc batteries, and lithium secondary batteries. Among them, lithium secondary batteries are in the spotlight for their advantages of free charging and discharging due to almost no memory effect, a very low self-discharge rate, and a high energy density, compared to nickel-based secondary batteries.

These lithium secondary batteries generally use lithium-based oxides and carbon materials as positive and negative electrode active materials, respectively. The lithium secondary batteries include an electrode assembly in which positive and negative electrode plates, coated with the positive and negative electrode active materials, respectively, are disposed with a separator therebetween and an exterior case, i.e., a battery case, that stores and seals the electrode assembly with an electrolyte.

In general, lithium secondary batteries may be classified, depending on the shape of the exterior case, into can-type secondary batteries in which the electrode assembly is accommodated in a metal can and pouch-type secondary batteries in which the electrode assembly is accommodated in a pouch of an aluminum laminate sheet.

Recently, secondary batteries have been widely used in medium and large devices for driving or energy storage, such as electric vehicles and energy storage systems (ESSs), as well as in small devices such as portable electronic devices. A plurality of secondary batteries described above may be electrically connected and stored inside a module case to form one battery module. In addition, multiple battery modules described above may be connected to configure one battery pack.

However, in the case where a large number of secondary batteries (battery cells) or a large number of battery modules are densely stored in a small space, they may be vulnerable to a thermal event. In particular, if an event such as thermal runaway occurs in any one battery cell, high-temperature gas, flame, and heat may be generated. If such gas, flame, or heat transfers to other battery cells included in the same battery module, an explosive chain reaction such as thermal propagation may occur. In addition, this chain reaction may cause accidents such as fire or explosion in other battery modules, as well as in the relevant battery module.

Moreover, since medium and large battery packs used in electric vehicles include a large number of battery cells and battery modules to increase output and/or capacity, the risk of a thermal chain reaction may be further increased. In addition, in the case of a battery pack mounted to an electric vehicle or the like, there may be users such as drivers nearby. Therefore, if a thermal event occurring in a specific battery module fails to be controlled to lead to a chain reaction, it may cause significant property damage and casualties.

Document US 2022/302548 A1 discloses a battery pack comprising a two-parts case that is closed so as to allow pressure relief when a predetermined threshold internal pressure is exceeded.

Document CN 208111552 U discloses a battery pack comprising a pressure release valve controlled by an elastic spring and comprising a breathable waterproof membrane.

Document US 2023/043355 A1 discloses a cover member for one or more battery cells that comprises a venting hole in the upper surface that can open under pressure.

Document KR 2023 0009760 A discloses a battery module comprising a pack case having a deformable top plate to accommodate excess pressure in the case.

### DISCLOSURE

### Technical Problem

The present disclosure aims to solve the problems described above and other problems.

The present disclosure also aims to provide a battery pack having a structure that facilitates venting control when a thermal event occurs.

The present disclosure also aims to provide a battery pack capable of suppressing or blocking heat propagation to neighboring battery modules when a thermal event occurs.

### Technical Solution

To solve this technical problem, the invention provides a battery pack according to claim 1.

As an alternative solution, the invention provides a battery pack according to claim 9.

The battery packs after the invention may present alternative features of dependent claims 2 to 8 and 10, in any combination allowed by the claims.

The invention also provides a vehicle according to claim 11.

### Advantageous Effects

According to at least one of the embodiments of the present disclosure, venting control of a battery pack may be facilitated.

According to at least one of the embodiments of the present disclosure, thermal runaway may be suppressed or blocked when a thermal event occurs.

### DESCRIPTION OF DRAWINGS

The accompanying drawings illustrate a preferred embodiment of the present disclosure and, together with the detailed description of the invention, serve to provide further understanding of the technical idea of the present disclosure, and thus, the present disclosure is not construed as being limited to the drawings.
FIG. 1 is a perspective view illustrating a battery pack according to an embodiment of the present disclosure.
FIG. 2 is a partially exploded view of the battery pack in FIG. 1.
FIG. 3 is an enlarged view of area A in FIG. 2.
FIG. 4 is a front view of the configuration in FIG. 3.
FIG. 5 is an enlarged view of area A in FIG. 2 when a thermal event occurs.
FIG. 6 is a front view of the configuration in FIG. 5.
FIG. 7 is a diagram illustrating a modified embodiment of the configuration in FIG. 6.
FIG. 8 is a diagram illustrating another modified embodiment of the configuration in FIG. 4.
FIG. 9 is a diagram illustrating a change in FIG. 8 when a thermal event occurs.
FIG. 10 is an enlarged view of a battery pack according to another embodiment of the present disclosure.
FIG. 11 is a top view of the configuration in FIG. 10.
FIG. 12 is a drawing illustrating a change in FIG. 10 when a thermal event occurs.
FIG. 13 is a top view of the configuration in FIG. 12.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the configurations proposed in the embodiments and drawings of this specification indicate only the most preferable embodiment of the present disclosure and do not represent all technical ideas of the present disclosure, so it should be understood that various equivalents and modifications could be made thereto at the time of filing the application.

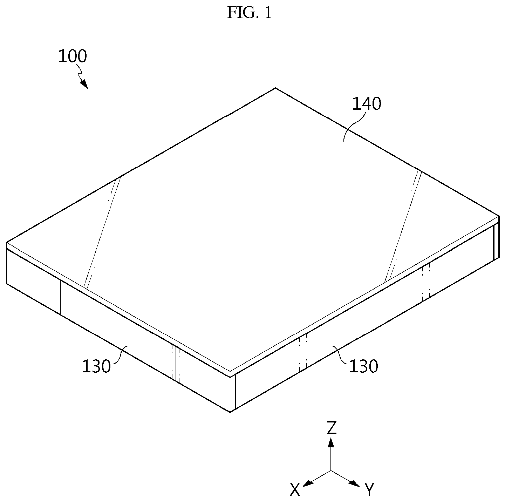

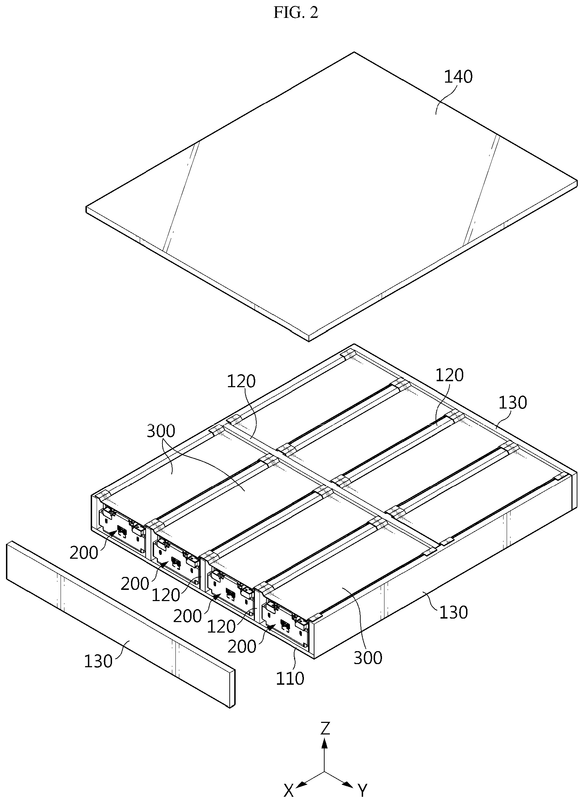

FIG. 1 is a perspective view illustrating a battery pack according to an embodiment of the present disclosure. FIG. 2 is a partially exploded view of the battery pack in FIG. 1. Referring to FIGS. 1 and 2, a battery pack according to an embodiment of the present disclosure may include a case 100, a battery module 200, and a venting cover 300.

The case 100 may provide a space therein. The case 100 may form the exterior of the battery pack. The case 100 may have a cuboid shape. The case 100 may include a base plate 110, a side wall 130, a partition wall 120, and a pack cover 140.

The battery module 200 may be stored inside the case 100. A plurality of battery modules 200 may be provided, and the plurality of battery modules 200 may be located, installed, coupled, fastened, or fixed inside the case 100. The battery module 200 may include a battery cell. In this case, the battery cell may indicate a secondary battery. A plurality of battery cells may be provided to configure the battery module 200. The battery module 200 may have a cuboid shape.

The venting cover 300 may be coupled, fastened, fixed, installed, or fixed to the case 100. The venting cover 300 may cover at least one surface of the battery module 200. For example, a plurality of venting covers 300 may be provided to cover at least one of an upper surface, a side surface, a front surface, and a back surface of the battery module 200. In addition, each of the plurality of venting cover 300 may be provided for each of the battery modules 200. In addition, the venting cover 300 may be configured such that at least a portion thereof is movable in the outward direction of the battery module 200. For example, in the case where the venting cover 300 covers the upper surface of the battery module 200, the venting cover 300 may be configured to move upward. In addition, for example, in the case where the venting cover 300 covers the front surface of the battery module 200, the venting cover 300 may be configured to move forward.

According to this configuration of the present disclosure, when a thermal event occurs in the battery module 200, at least a portion of the venting cover 300 may move toward the outside of the battery module 200. This may guide the flow of venting gas g or ignitable particles s discharged from the battery module 200. Therefore, the thermal safety of the battery pack may be improved.

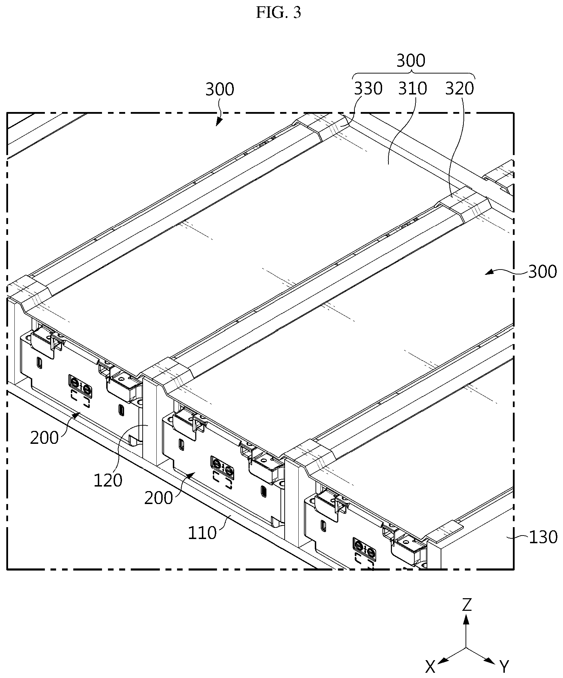

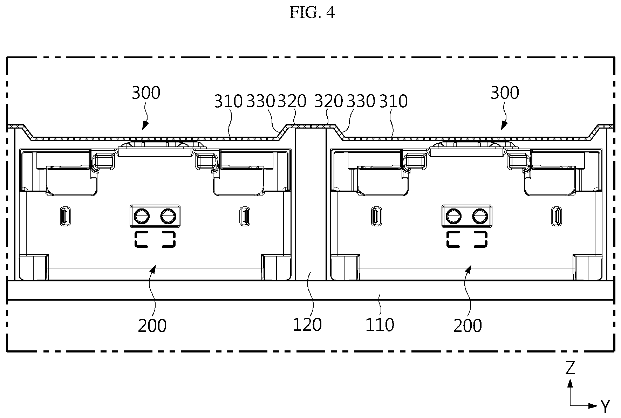

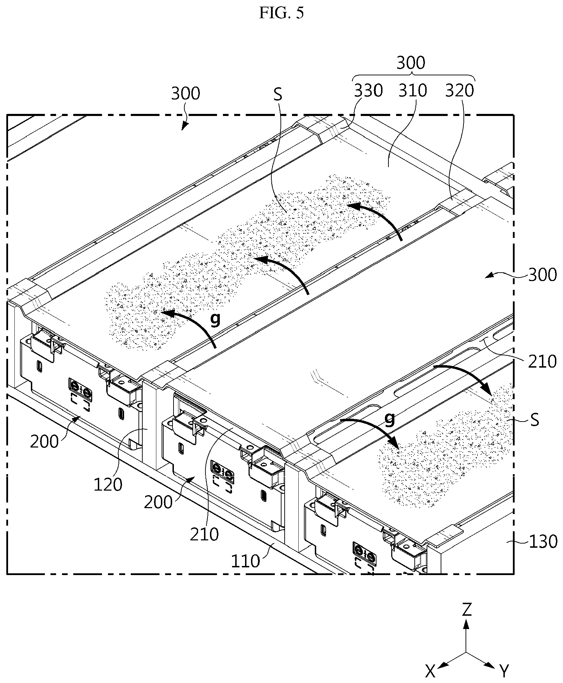

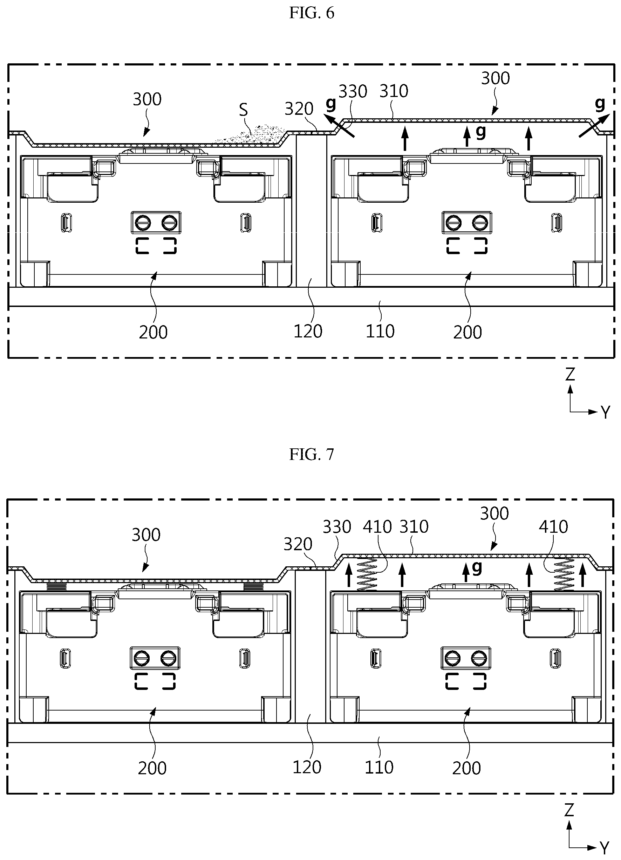

FIG. 3 is an enlarged view of area A in FIG. 2. FIG. 4 is a front view of the configuration in FIG. 3. FIG. 5 is an enlarged view of area A in FIG. 2 when a thermal event occurs. FIG. 6 is a front view of the configuration in FIG. 5. Referring to FIGS. 3 to 6, a battery module 200 of a battery pack according to an embodiment of the present disclosure may be configured to enable upward venting.

A thermal event may occur from a battery cell located inside the battery module 200. The back, left, and right surfaces of the battery module 200 may be covered by the partition walls 120. In addition, the front surface of the battery module 200 may be covered by the side wall 130. Accordingly, the venting gas g or ignitable particles s may be configured to be discharged upward from the battery module 200 or in the +Z-axis direction. In this case, the venting cover 300 may be configured to cover the upper surface of the battery module 200.

According to this configuration of the present disclosure, the venting gas g and ignitable particles s may move at least a portion of the venting cover 300 upward. The venting cover 300 may facilitate the discharge of venting gas g and ignitable particles s.

Referring to FIGS. 3 to 6, the battery module 200 of a battery pack according to an embodiment of the present disclosure may have a venting hole 210 formed on the upper surface thereof. The venting cover 300 may cover the venting hole 210.

According to this configuration of the present disclosure, the venting gas g and ignitable particles s may be discharged upward or in the +Z-axis direction through the venting hole 210. The discharged venting gas g and ignitable particles s may move at least a portion of the venting cover 300 upward. The venting cover 300 may facilitate the discharge of venting gas g and ignitable particles s.

Referring to FIGS. 3 to 6, the venting cover 300 of a battery pack according to an embodiment of the present disclosure may be configured such that at least a portion thereof moves upward when a thermal event occurs from the battery module 200.

According to this configuration of the present disclosure, the venting cover 300 may facilitate the discharge of venting gas g and ignitable particles s.

Referring to FIGS. 3 to 6, the venting cover 300 of a battery pack according to an embodiment of the present disclosure may form a gap between the venting cover 300 and the upper surface of the battery module 200.

According to this configuration of the present disclosure, the venting gas g and ignitable particles s discharged from the battery module 200 may apply pressure to the entire area of the venting cover 300. This may facilitate the movement of the venting cover 300 and the discharge of the venting gas g and ignitable particles s.

In addition, according to this configuration of the present disclosure, the gap between the battery module 200 and the venting cover 300 may improve the insulation effect. For example, the venting gas g and ignitable particles s discharged from one of the plurality of battery modules 200 may be transmitted to neighboring battery modules 200. **In** this case, the venting cover 300 covering the neighboring battery module 200 may prevent the neighboring battery module 200 from being directly exposed to the venting gas g or ignitable particles s. **In** addition, the heat transfer to the neighboring battery module 200 may be minimized.

Referring to FIGS. 3 to 6, the venting cover 300 of a battery pack according to an embodiment of the present disclosure may be made of a material having excellent heat resistance or flame retardancy. For example, the venting cover 300 may be made of at least one of a mica material, a silicone pad, or an aerogel pad. In addition, the venting cover 300 may be configured as a thin metal plate coated with a material having excellent heat resistance or flame retardancy. For example, the venting cover 300 may be configured as a thin metal plate coated with at least one of a mica material, a silicone pad, or an aerogel pad.

According to this configuration of the present disclosure, the insulation effect between neighboring battery modules 200 may be improved. As a result, the thermal safety of the battery pack may be improved.

Referring to FIGS. 3 to 6, the venting cover 300 of a battery pack according to an embodiment of the present disclosure may include a first moving portion 310, a first fixing portion 320, and a first bending portion 330. The first moving portion 310 may have a square plate shape. The first moving portion 310 may cover at least one surface of the battery module 200.

The first fixing portion 320 may be fixed to an end of the partition wall 120. For example, the first moving portion 310 may cover the upper surface of the battery module 200, and the first fixing portion 320 may be fixed to the upper portion or upper end of the partition wall 120. The first fixing portion 320 may be fastened, coupled, or attached to the partition wall 120.

The first bending portion 330 may connect the first fixing portion 320 and the first moving portion 310. The first fixing portion 320, the first moving portion 310, and the first bending portion 330 may be formed integrally. In addition, a plurality of first bending portions 330 and a plurality of first fixing portions 320 may be provided. For example, four first bending portions 330 and four first fixing portions 320 may be provided, and may be respectively positioned at four corner areas of the first moving portion 310. The first fixing portion 320 may be positioned outward from the first moving portion 310. For example, the first fixing portion 320 may be positioned higher than the first moving portion 310. Alternatively, the first moving portion 310 may be positioned inward from the first fixing portion 320. For example, the first moving portion 310 may be positioned lower than the first fixing portion 320.

When a thermal event occurs from the battery module 200, the first moving portion 310 may move outward or upward. The movement of the first moving portion 310 may be performed by the first bending portion 330 being bent. For example, the first bending portion 330 may be bent or folded upward around the first fixing portion 320. As a result, the first moving portion 310 may move upward.

According to this configuration of the present disclosure, when a thermal event occurs, the movement of the venting cover 300 may be facilitated, and the discharge of venting gas g and ignitable particles s may be facilitated.

Referring to FIGS. 3 to 6, the first moving portion 310 of a battery pack according to an embodiment of the present disclosure may be configured to be located outward from the end of the partition wall 120 when a thermal event occurs from the battery module 200. For example, in the case where the venting cover 300 covers the upper surface of the battery module 200, the first moving portion 310 may be positioned lower than the upper end of the partition wall 120. In addition, if a thermal event occurs, the first moving portion 310 may be positioned higher than the upper end of the partition wall 120.

According to this configuration of the present disclosure, when a thermal event occurs, the first moving portion 310 may be positioned higher than the upper end of the partition wall 120, thereby facilitating the discharge of venting gas g and ignitable particles s.

FIG. 7 is a diagram illustrating a modified embodiment of the configuration in FIG. 6. Referring to FIG. 7, a battery pack according to an embodiment of the present disclosure may further include a first elastic member 410 positioned between the first moving portion 310 and the battery module 200. For example, the first elastic member 410 may be positioned between the inner surface of the first moving portion 310 and the upper surface of the battery module 200. The first elastic member 410 may provide a restoring force to the first moving portion 310 in the upward direction or the +Z-axis direction.

According to this configuration of the present disclosure, when a thermal event occurs, the bending of the first bending portion 330 or the movement of the first moving portion 310 may be facilitated due to the pressure of the venting gas g and the restoring force of the first elastic member 410.

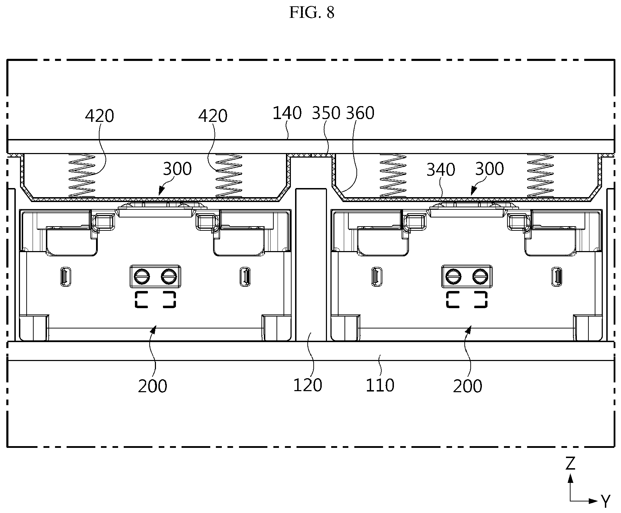

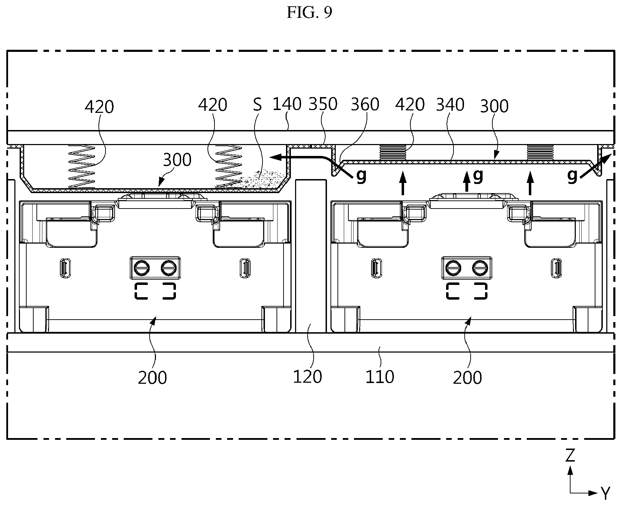

FIG. 8 is a diagram illustrating another modified embodiment of the configuration in FIG. 4. FIG. 9 is a diagram illustrating a change in FIG. 8 when a thermal event occurs. Referring to FIGS. 8 and 9, a case 100 of a battery pack according to an embodiment of the present disclosure may include a pack cover 140 covering the venting cover 300, and the venting cover 300 may be installed on the pack cover 140.

The pack cover 140 may have a square plate shape. The pack cover 140 may be fastened, coupled, fixed, or attached to the side wall 130 or the partition wall 120. The pack cover 140 may cover the upper surfaces of a plurality of battery modules 200 or a plurality of venting covers 300. The venting cover 300 may be installed, coupled, fixed, or attached to the inner surface of the pack cover 140.

According to this configuration of the present disclosure, the installation of the venting cover 300 may be facilitated.

Referring to FIGS. 8 and 9, the venting cover 300 of a battery pack according to an embodiment of the present disclosure may include a second moving portion 340, a second fixing portion 350, and a second bending portion 360. The second moving portion 340 may have a square plate shape. The second moving portion 340 may cover at least one surface of the battery module 200.

The second fixing portion 350 may be fastened, coupled, fixed, or attached to the inner surface of the pack cover 140. For example, the second moving portion 340 may cover the upper surface of the battery module 200.

The second bending portion 360 may connect the second fixing portion 350 and the second moving portion 340. The second fixing portion 350, the second moving portion 340, and the second bending portion 360 may be formed integrally. In addition, a plurality of second bending portions 360 and a plurality of second fixing portions 350 may be provided. For example, four second bending portions 360 and four second fixing portions 350 may be provided, and may be respectively positioned at four corner areas of the second moving portion 340. The second fixing portion 350 may be positioned outward from the second moving portion 340. For example, the second fixing portion 350 may be positioned higher than the second moving portion 340. Alternatively, the second moving portion 340 may be positioned inward from the second fixing portion 350. For example, the second moving portion 340 may be positioned lower than the second fixing portion 350.

When a thermal event occurs from the battery module 200, the second moving portion 340 may move outward or upward. The movement of the second moving portion 340 may be performed by the second bending portion 360 being bent. For example, the second bending portion 360 may be bent or folded upward around the second fixing portion 350. As a result, the second moving portion 340 may move upward.

According to this configuration of the present disclosure, when a thermal event occurs, the movement of the venting cover 300 may be facilitated, and the discharge of venting gas g and ignitable particles s may be facilitated.

Referring to FIGS. 8 and 9, a battery pack according to an embodiment of the present disclosure may further include a second elastic member 420 positioned between the second moving portion 340 and the pack cover 140. For example, the second elastic member 420 may be positioned between the outer surface of the second moving portion 340 and the inner surface of the pack cover 140. The second elastic member 420 may provide a restoring force to the second moving portion 340 in the upward direction or the +Z-axis direction.

According to this configuration of the present disclosure, when a thermal event occurs, the bending of the second bending portion 360 or the movement of the second moving portion 340 may be facilitated due to the pressure of the venting gas g and the restoring force of the second elastic member 420.

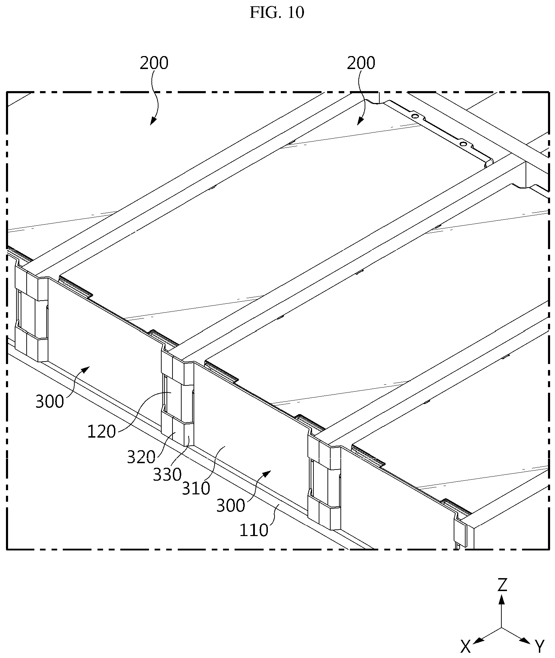

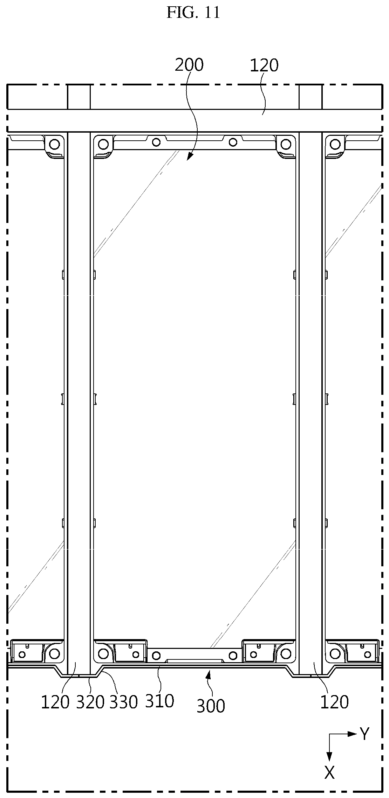

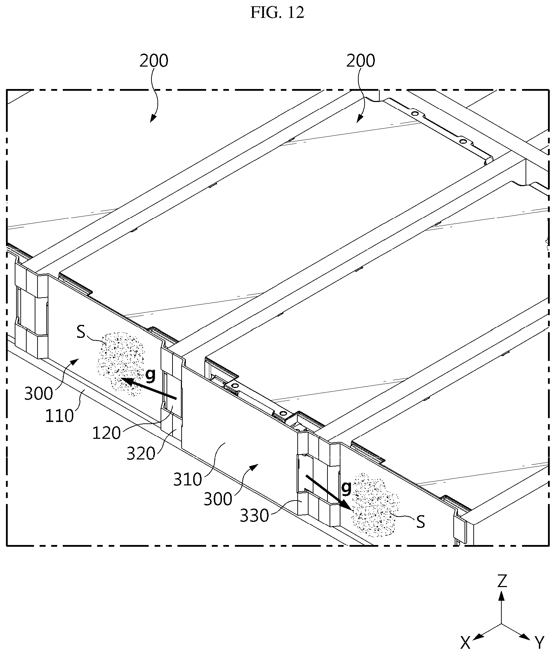

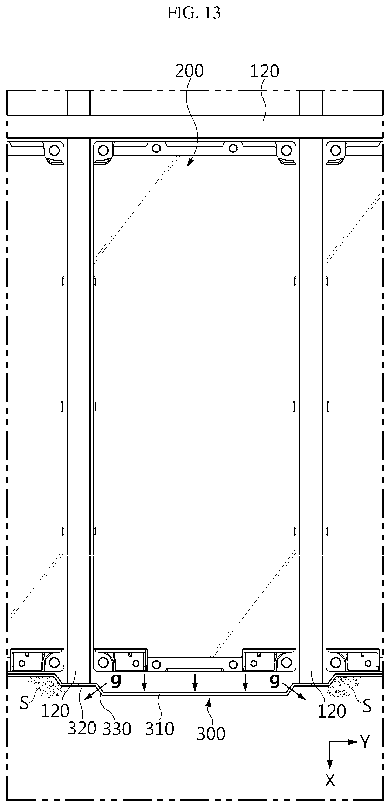

FIG. 10 is an enlarged view of a battery pack according to another embodiment of the present disclosure. FIG. 11 is a top view of the configuration in FIG. 10. FIG. 12 is a drawing illustrating a change in FIG. 10 when a thermal event occurs. FIG. 13 is a top view of the configuration in FIG. 12.

Referring to FIGS. 10 to 13, a battery module 200 of a battery pack according to an embodiment of the present disclosure may be configured to enable forward venting. In this case, the venting cover 300 may be configured to cover the front surface of the battery module 200.

According to this configuration of the present disclosure, the venting gas g and the ignitable particles s may move at least a portion of the venting cover 300 forward or in the +X-axis direction. The venting cover 300 may facilitate the discharge of the venting gas g and ignitable particles s.

Referring to FIGS. 10 to 13, the venting cover 300 of a battery pack according to an embodiment of the present disclosure may form a gap between the venting cover 300 and the front surface of the battery module 200.

According to this configuration of the present disclosure, the venting gas g and ignitable particles s discharged from the battery module 200 may apply pressure to the entire area of the venting cover 300. As a result, the movement of the venting cover 300 may be facilitated, and the discharge of the venting gas g and ignitable particles s may be smooth.

In addition, according to this configuration of the present disclosure, the gap between the battery module 200 and the venting cover 300 may improve the insulation effect. For example, the venting gas g and ignitable particles s discharged from one of the plurality of battery modules 200 may be transmitted to the neighboring battery module 200. In this case, the venting cover 300 covering the neighboring battery module 200 may prevent the neighboring battery module 200 from being directly exposed to the venting gas g or ignitable particles s. In addition, the heat transfer to the neighboring battery module 200 may be minimized.

Referring to FIGS. 10 to 13, the venting cover 300 of a battery pack according to an embodiment of the present disclosure may include a first moving portion 310, a first fixing portion 320, and a first bending portion 330. The first moving portion 310 may have a square plate shape. The first moving portion 310 may cover at least the front surface of the battery module 200.

The first fixing portion 320 may be fixed to an end of the partition wall 120. For example, the first moving portion 310 may cover the front surface of the battery module 200, and the first fixing portion 320 may be fixed to the front end of the partition wall 120. The first fixing portion 320 may be fastened, coupled, or attached to the partition wall 120.

The first bending portion 330 may connect the first fixing portion 320 and the first moving portion 310. The first fixing portion 320, the first moving portion 310, and the first bending portion 330 may be formed integrally. In addition, a plurality of first bending portion 330 and a plurality of first fixing portion 320 may be provided. For example, four first bending portions 330 and four first fixing portions 320 may be provided, and may be respectively positioned at four corner areas of the first moving portion 310. The first fixing portion 320 may be positioned outward from the first moving portion 310. For example, the first fixing portion 320 may be positioned forward from the first moving portion 310. Alternatively, the first moving portion 310 may be positioned inward from the first fixing portion 320. For example, the first moving portion 310 may be positioned backward or inward from the first fixing portion 320.

When a thermal event occurs from the battery module 200, the first moving portion 310 may move outward, forward, or in the +X-axis direction. The movement of the first moving portion 310 may be performed by the first bending portion 330 being bent. For example, the first bending portion 330 may be bent or folded forward around the first fixing portion 320. As a result, the first moving portion 310 may move forward or in the +X-axis direction.

According to this configuration of the present disclosure, when a thermal event occurs, the movement of the venting cover 300 may be facilitated, and the discharge of the venting gas g and ignitable particles s may be facilitated.

Referring to FIGS. 10 to 13, the first moving portion 310 of a battery pack according to an embodiment of the present disclosure may be configured to be located outward, forward, or in the +X-axis direction from the end of the partition wall 120 when a thermal event occurs from the battery module 200. For example, in the case where the venting cover 300 covers the front surface of the battery module 200, the first moving portion 310 may be positioned behind the front end of the partition wall 120. In addition, when a thermal event occurs, the first moving portion 310 may be positioned ahead of the front end of the partition wall 120.

According to this configuration of the present disclosure, when a thermal event occurs, the first moving portion 310 may be positioned ahead of the front end of the partition wall 120, thereby facilitating the discharge of venting gas g and ignitable particles s.

A vehicle according to the present disclosure may include two or more battery cell assemblies according to the present disclosure. The battery cell assembly according to the present disclosure may be applied to a vehicle such as an electric vehicle or a hybrid vehicle. In addition, the vehicle according to the present disclosure may further include various other components included in the vehicle in addition to the battery cell assembly. For example, the vehicle according to the present disclosure may further include a car body, a motor, or a control device such as an ECU (electronic control unit), in addition to the battery cell assembly according to the present disclosure.

Meanwhile, although terms indicating directions such as upward, downward, left, right, forward, and backward are used in this specification, it is obvious to those skilled in the art that these terms are only for convenience of explanation and may vary depending on the location of the target object or the location of the observer.

## Claims

1. A battery pack comprising:
a case (100) having a base plate (110) and providing an inner space;
a battery module (200) located inside the case (100); and
a venting cover (300) coupled to the case (110), covering at least one surface of the battery module (200), at least a portion of the venting cover (300) being movable in an outward direction of the battery module (200),
the case (110) comprising a partition wall (120) installed on the base plate (110) and partitioning the inner space,
**characterized in that** the venting cover (300) is installed on the partition wall (120) and comprises:
a first moving portion (310) covering at least one surface of the battery module (200) and having a plate shape;
a first fixing portion (320) fixed to an end of the partition wall (120); and
a first bending portion (330) connecting the first fixing portion (320) and the first moving portion (310).

2. The battery pack according to claim 1,
wherein the battery module (200) is configured to enable upward venting.

3. The battery pack according to claim 1,
wherein the battery module (200) has a venting hole (210) formed on an upper surface.

4. The battery pack according to claim 2,
wherein at least a portion of the venting cover (300) is movable upward when a thermal event occurs from the battery module (200).

5. The battery pack according to claim 1,
wherein the venting cover (300) forms a gap between the venting cover (300) and an upper surface of the battery module (200).

6. The battery pack according to claim 1,
wherein a distance between the venting cover (300) and the battery module (300) is increases when a thermal event occurs from the battery module (200).

7. The battery pack according to claim 1,
further comprising a first elastic member (410) positioned between the first moving portion (310) and the battery module (200).

8. The battery pack according to claim 1,
wherein the first moving portion (310) is located outward from the end of the partition wall (120) when a thermal event occurs from the battery module (200).

9. A battery pack comprising:
a case (100) having a base plate (110) and providing an inner space;
a battery module (200) located inside the case (100); and
a venting cover (300) coupled to the case (110), covering at least one surface of the battery module (200), at least a portion of the venting cover (300) being movable in an outward direction of the battery module (200),
**characterized in that** the case (110) comprises a pack cover (140) covering the venting cover (300),
wherein the venting cover (300) is installed on the pack cover (140) and comprises:
a second moving portion (340) covering at least one surface of the battery module (200) and having a plate shape;
a second fixing portion (350) fixed to a lower surface of the pack cover (140); and
a second bending portion (360) connecting the second fixing portion (350) and the second moving portion (340).

10. The battery pack according to claim 9,
further comprising a second elastic member (420) positioned between the second moving portion (340) and the pack cover (140).

11. A vehicle comprising a battery pack according to any one of claims 1 to 10.

## Patentansprüche

1. Batteriepack, umfassend:
ein Gehäuse (100), das eine Grundplatte (110) aufweist und einen Innenraum bereitstellt;
ein Batteriemodul (200), das sich innerhalb des Gehäuses (100) befindet; und
eine Entlüftungsabdeckung (300), die mit dem Gehäuse (110) gekoppelt ist und mindestens eine Oberfläche des Batteriemoduls (200) abdeckt, wobei mindestens ein Abschnitt der Entlüftungsabdeckung (300) in einer Richtung nach außen von dem Batteriemodul (200) bewegbar ist,
wobei das Gehäuse (110) eine Trennwand (120) umfasst, die auf der Grundplatte (110) installiert ist und den Innenraum unterteilt,
**dadurch gekennzeichnet, dass** die Entlüftungsabdeckung (300) an der Trennwand (120) installiert ist und Folgendes umfasst:
einen ersten beweglichen Abschnitt (310), der mindestens eine Oberfläche des Batteriemoduls (200) abdeckt und eine Plattenform aufweist;
einen ersten Befestigungsabschnitt (320), der an einem Ende der Trennwand (120) befestigt ist; und
einen ersten Biegeabschnitt (330), der den ersten Befestigungsabschnitt (320) und den ersten beweglichen Abschnitt (310) verbindet.

2. Batteriepack nach Anspruch 1,
wobei das Batteriemodul (200) so eingerichtet ist, dass es eine Entlüftung nach oben ermöglicht.

3. Batteriepack nach Anspruch 1,
wobei das Batteriemodul (200) ein Entlüftungsloch (210) aufweist, das an einer oberen Oberfläche ausgebildet ist.

4. Batteriepack nach Anspruch 2,
wobei mindestens ein Abschnitt der Entlüftungsabdeckung (300) nach oben bewegbar ist, wenn ein thermisches Ereignis in dem Batteriemodul (200) auftritt.

5. Batteriepack nach Anspruch 1,
wobei die Entlüftungsabdeckung (300) einen Spalt zwischen der Entlüftungsabdeckung (300) und einer oberen Oberfläche des Batteriemoduls (200) bildet.

6. Batteriepack nach Anspruch 1,
wobei sich ein Abstand zwischen der Entlüftungsabdeckung (300) und dem Batteriemodul (300) vergrößert, wenn ein thermisches Ereignis in dem Batteriemodul (200) auftritt.

7. Batteriepack nach Anspruch 1,
ferner umfassend ein erstes elastisches Element (410), das zwischen dem ersten beweglichen Abschnitt (310) und dem Batteriemodul (200) angeordnet ist.

8. Batteriepack nach Anspruch 1,
wobei sich der erste bewegliche Abschnitt (310) außerhalb des Endes der Trennwand (120) befindet, wenn ein thermisches Ereignis in dem Batteriemodul (200) auftritt.

9. Batteriepack, umfassend:
ein Gehäuse (100), das eine Grundplatte (110) aufweist und einen Innenraum bereitstellt;
ein Batteriemodul (200), das sich innerhalb des Gehäuses (100) befindet; und
eine Entlüftungsabdeckung (300), die mit dem Gehäuse (110) gekoppelt ist und mindestens eine Oberfläche des Batteriemoduls (200) abdeckt, wobei mindestens ein Abschnitt der Entlüftungsabdeckung (300) in einer Richtung nach außen von dem Batteriemodul (200) bewegbar ist,
**dadurch gekennzeichnet, dass** das Gehäuse (110) eine Packabdeckung (140) umfasst, die die Entlüftungsabdeckung (300) abdeckt,
wobei die Entlüftungsabdeckung (300) an der Packabdeckung (140) installiert ist und Folgendes umfasst:
einen zweiten beweglichen Abschnitt (340), der mindestens eine Oberfläche des Batteriemoduls (200) abdeckt und eine Plattenform aufweist;
einen zweiten Befestigungsabschnitt (350), der an einer unteren Oberfläche der Packabdeckung (140) befestigt ist; und
einen zweiten Biegeabschnitt (360), der den zweiten Befestigungsabschnitt (350) und den zweiten beweglichen Abschnitt (340) verbindet.

10. Batteriepack nach Anspruch 9,
ferner umfassend ein zweites elastisches Element (420), das zwischen dem zweiten beweglichen Abschnitt (340) und der Packabdeckung (140) angeordnet ist.

11. Fahrzeug, umfassend einen Batteriepack nach einem der Ansprüche 1 bis 10.

## Revendications

1. Bloc-batterie comprenant :
un boîtier (100) ayant une plaque de base (110) et fournissant un espace interne ;
un module de batterie (200) situé à l'intérieur du boîtier (100) ; et
un couvercle d'évent (300) couplé au boîtier (110), recouvrant au moins une surface du module de batterie (200), au moins une partie du couvercle d'évent (300) étant mobile dans une direction vers l'extérieur du module de batterie (200),
le boîtier (110) comprenant une paroi de séparation (120) installée sur la plaque de base (110) et séparant l'espace interne,
**caractérisé en ce que** le couvercle d'évent (300) est installé sur la paroi de séparation (120) et comprend
une première partie mobile (310) recouvrant au moins une surface du module de batterie (200) et ayant une forme de plaque ;
une première partie de fixation (320) fixée à une extrémité de la paroi de séparation (120) ; et
une première partie de pliage (330) reliant la première partie de fixation (320) et la première partie mobile (310).

2. Bloc-batterie selon la revendication 1,
dans lequel le module de batterie (200) est configuré pour permettre une évacuation vers le haut.

3. Bloc-batterie selon la revendication 1,
dans lequel le module de batterie (200) comporte un trou d'évent (210) formé sur une surface supérieure.

4. Bloc-batterie selon la revendication 2,
dans lequel au moins une partie du couvercle d'évent (300) est mobile vers le haut lorsqu'un événement thermique se produit depuis le module de batterie (200).

5. Bloc-batterie selon la revendication 1,
dans lequel le couvercle d'évent (300) forme un espace entre le couvercle d'évent (300) et une surface supérieure du module de batterie (200).

6. Bloc-batterie selon la revendication 1,
dans lequel une distance entre le couvercle d'évent (300) et le module de batterie (300) augmente lorsqu'un événement thermique se produit depuis le module de batterie (200).

7. Bloc-batterie selon la revendication 1,
comprenant en outre un premier élément élastique (410) positionné entre la première partie mobile (310) et le module de batterie (200).

8. Bloc-batterie selon la revendication 1,
dans lequel la première partie mobile (310) est située vers l'extérieur depuis l'extrémité de la paroi de séparation (120) lorsqu'un événement thermique se produit depuis le module de batterie (200).

9. Bloc-batterie comprenant :
un boîtier (100) ayant une plaque de base (110) et fournissant un espace interne ;
un module de batterie (200) situé à l'intérieur du boîtier (100) ; et
un couvercle d'évent (300) couplé au boîtier (110), recouvrant au moins une surface du module de batterie (200), au moins une partie du couvercle d'évent (300) étant mobile dans une direction vers l'extérieur du module de batterie (200),
**caractérisé en ce que** le boîtier (110) comprend un couvercle de bloc (140) recouvrant le couvercle d'évent (300),
dans lequel le couvercle d'évent (300) est installé sur le couvercle de bloc (140) et comprend :
une seconde partie mobile (340) recouvrant au moins une surface du module de batterie (200) et ayant une forme de plaque ;
une seconde partie de fixation (350) fixée à une surface inférieure du couvercle de bloc (140) ; et
une seconde partie de pliage (360) reliant la seconde partie de fixation (350) et la seconde partie mobile (340).

10. Bloc-batterie selon la revendication 9,
comprenant en outre un second élément élastique (420) positionné entre la seconde partie mobile (340) et le couvercle de bloc (140).

11. Véhicule comprenant un bloc-batterie selon l'une quelconque des revendications 1 à 10.
